(19) Europäisches Patentamt
European Patent Office
Office européen des brevets

(11)  EP 2 152 555 B1

(12)  EUROPÄISCHE PATENTSCHRIFT

(45) Veröffentlichungstag und Bekanntmachung des Hinweises auf die Patenterteilung:
**21.09.2011  Patentblatt 2011/38**

(51) Int Cl.:
*B60T 8/36* (2006.01)    *G05D 7/06* (2006.01)

(21) Anmeldenummer: **08749643.6**

(22) Anmeldetag: **22.04.2008**

(86) Internationale Anmeldenummer:
**PCT/EP2008/054852**

(87) Internationale Veröffentlichungsnummer:
**WO 2008/132095 (06.11.2008 Gazette 2008/45)**

(54)  **KORREKTURVERFAHREN ZUM KORRIGIEREN VON ANSTEUERKENNLINIEN FÜR ANALOGISIERTE HYDRAULIKVENTILE IN KRAFTFAHRZEUGBREMSSYSTEMEN**

CORRECTION METHOD FOR THE CORRECTION OF CHARACTERISTIC CURVES FOR ANALOGIZED HYDRAULIC VALVES IN MOTOR VEHICLE BRAKING SYSTEMS

PROCÉDÉ DE CORRECTION DES CARACTÉRISTIQUES DE COMMANDE DE SOUPAPES HYDRAULIQUE À FONCTIONNEMENT ANALOGIQUE DANS DES SYSTÈMES DE FREINAGE D'AUTOMOBILES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.04.2007   DE 102007019929**

(43) Veröffentlichungstag der Anmeldung:
**17.02.2010   Patentblatt 2010/07**

(73) Patentinhaber: **Continental Teves AG & Co. OHG 60488 Frankfurt (DE)**

(72) Erfinder:
• **BURKHARD, Dieter**
  **55411 Bingen-Büdesheim (DE)**
• **MÜLLER, Jochen**
  **35037 Marburg (DE)**
• **ZIMMERMANN, Jochen**
  **56357 Oberwallmenach (DE)**
• **SCHMIDT, Robert**
  **65779 Kelkheim (DE)**

(56) Entgegenhaltungen:
WO-A-2006/042859     US-A1- 2007 069 577
US-B1- 6 592 192

**Beschreibung**

Die Erfindung betrifft ein Korrekturverfahren gemäß Oberbegriff von Anspruch 1, ein Bremsdruckregelvorrichtung gemäß Anspruch 9 sowie die Verwendung des Korrekturverfahrens in Kraftfahrzeugbremssystemen.

In elektronisch regelbaren Kraftfahrzeugbremsen mit unter anderem Blockierschutzfunktion (ABS), aber auch ggf. Fahrdynamikreglungsfunktionen (ESP) usw., besteht ein ständig steigender Bedarf an einer erhöhten Qualität der Regelung, wodurch sich neben einer verbesserten Sicherheit auch eine Erhöhung des Regelungskomforts erzielen lässt. Allerdings erfordert dies meist aufwändige und damit kostenintensive hydraulische Anlagen, welche mit zusätzlichen Komponenten (Drucksensoren, Regelventile, Schaltblenden etc.) ausgestattet werden müssen. Daher ist es erforderlich, zumindest einen Teil der Ventile in elektronischen Bremssystemen analog zu betreiben.

Aus der EP-A-0 876 270 geht das Grundprinzip eines Regelungszyklusses bei einer Blockierschutzregelung hervor. Nach dem dort beschriebenen Verfahren wird zur Steuerung des Bremsdruckaufbaus während eines Regelungsvorgangs in der aktuellen Bremsdruckaufbauphase der Gradient des Bremsdruckaufbaus in der vorangegangenen Bremsdruckaufbauphase berücksichtigt.

Beispielsweise aus der WO 2004/101339 geht hervor, dass es für den Betrieb der analog betriebenen, elektrisch angesteuerten Hydraulikventile wichtig ist, das Magnetfeld der Ventilspule und damit die Stößelposition zur Herstellung eines gewünschten Druckgradienten durch den Spulenstrom durch einen Stromregler möglichst genau einzustellen. Die Stößelposition hängt dabei unter anderem von den aktuellen Druckverhältnissen und ventilspezifischen Fertigungstoleranzen recht empfindlich ab. Liegt keine direkt gemessene Druckreferenz aus dem Radbremszylinder vor, muss das Bremssystem den Zusammenhang zwischen Öffnungsstrom, Differenzdruck und Volumenfluss für ein analog betriebenes Ventil genau kennen. Ist dieser Zusammenhang bekannt, kann das Regelsystem mit einem festgelegten Spulenstrom den gewünschte Druckgradient reproduzierbar einstellen. Zum Ermitteln des Zusammenhangs zwischen Ventilstrom und Stößelstellung sind in der Regel aufwändige Messungen der individuellen Ventilcharakteristik nach der Herstellung der Ventile innerhalb des zusammengesetzten Bremssystems erforderlich. Hierzu müsste allerdings jedes hergestellte Bremsensteuerungsaggregat mit einem Prüfstand verbunden werden, was auf die Fertigungskosten einen unerwünscht großen Einfluss hätte.

Zur Lösung dieses Problems ist in der WO 2004/101339 vorgeschlagen worden, während des Betriebs der Bremsvorrichtung, also z.B. während der Fahrt des Kraftfahrzeugs, zunächst eine Ansteuerkennlinie vorzugeben und dann diese beispielsweise entweder werkseitig gespeicherte oder einmalig bei der Inbetriebnahme des Bremsensteuergerätes durch eine zusätzliche Kalibrierroutine selbstständig erstellte Kennlinie während elektronischer Bremsenregelungsvorgänge (z. B. während einer ABS- oder ESP-Regelung) zu korrigieren. Zu dieser "dynamischen" Korrektur wird ein Lernverfahren durchgeführt, bei dem Korrekturwerte erstellt werden, mit denen die vorgegebene Ansteuerkennlinie korrigiert wird. Während einer Druckaufbauphase wird das Ventil durch den Regler mit einem Strom beaufschlagt, der einem bestimmten Volumenstrom entspricht. Dieser Volumenstrom wird vom Regler in Abhängigkeit des Raddrucks und der Druck/Volumenkennlinie so bestimmt, dass das Ventil in einem stabilen Punkt im Arbeitstromkennfeld betrieben wird.

Es hat sich gezeigt, dass das zuvor beschriebene Korrekturverfahren während des Betriebs nicht immer eine Ventilkennlinie erzeugt, mit der Volumenstrom optimal bezüglich hohem Komfort und hoher Regelgüte eingestellt werden kann.

Die Erfindung setzt sich daher zum Ziel, den Komfort und die Regelungsgenauigkeit bei Betrieb mit einer zusätzlichen Regelungsfunktion in einem blockiergeschützten elektronischen Bremsdruckregelvorrichtung mit zumindest einem analog betriebenen Regelventil noch weiter zu verbessern.

Diese Aufgabe wird erfindungsgemäß gelöst durch das Verfahren gemäß Anspruch 1.

Die Erfindung geht von der Überlegung aus, dass sich das beispielsweise über die Druck/Verzögerungskennlinie ermittelbare, also geschätzte, Blockierdruckniveau (nachfolgend Modellblockierdruckniveau) zur Korrektur der Ansteuerkennlinie nutzen lässt.

Ein Raddruckregler mit Blockierschutzfunktion, welcher keine Drucksensoren in den Radbremskreisen aufweist, nutzt üblicherweise einen auf an sich bekannte Weise errechenbaren (Rad-)Modelldruck, welcher den geschätzten Raddruck wiedergibt. Dieser lässt sich beispielsweise aus dem Vordruck, welcher in der Regel mit einem Drucksensor im Bereich des Hauptzylinders messbar ist, und den Ventilöffnungs- bzw. schließzeiten abschätzen.

Gemäß der Erfindung wird während der Raddruckregelung, insbesondere nach einer Druckaufbauphase, der aktuelle, aus dem Raddruckmodell gebildete, Druckmodellwert mit einem Modell-blockierdruckniveau verglichen und mit dem Druckmodellwert und dem Modellblockierdruck unter Verwendung einer Druckmittel/Volumenkennlinie der Druckmittelvolumenfluss während eines Regelzyklusses bestimmt. Dieser Schritt wird bevorzugt zwischen einer Druckaufbauphase nach einer Druckabbauphase und besonders bevorzugt vor der nächsten Durchabbauphase durchgeführt.

Zur Korrektur der vorgegebenen Ansteuerkennlinie wird bevorzugt eine neue Ansteuerkennlinie ermittelt oder es werden Korrekturgrößen zur Korrektur der vorhandenen Ansteuerkennlinie ermittelt. Besonders bevorzugt erfolgt die Korrektur nach Maßgabe eines Lernverfahrens (rekursive Korrektur während einer unendlichen Programmschleife des Reglers).

Bevorzugt unterscheidet das Verfahren mindestens einen, insbesondere alle der folgenden alternativen Fälle a) bis c):

a) Der Druckwert aus dem Radruckmodell erreicht nicht das erwartete Blockierdruckniveau. In diesem Fall war der reale Volumenstrom durch das geregelte Ventil größer, als der mit dem Radmodelldruck errechnete Volumenstrom. Das Ventil wurde also in einem zu hohen Durchflussbereich betrieben. Die Ansteuerkennlinie muss entsprechend, was bei dieser Alternative besonders bevorzugt ist, in Richtung niedrigerer Durchflusswerte angepasst werden.

b) Der Druckwert aus dem Radruckmodell überschreitet das erwartete Blockierdruckniveau. In diesem Fall war der reale Volumenstrom durch das Ventil geringer, als der im Radmodelldruck abgebildete Volumenstrom. Das analoge Ventil wird in einem zu geringen Durchflussbereich betrieben. Die Ansteuerkennlinie muss entsprechend, was bei dieser Alternative besonders bevorzugt ist, in Richtung höherer Durchfluswerte angepasst werden.

c) Der Druck aus dem Raddruckmodell erreicht das erwartete Blockierdruckniveau innerhalb von vorgegebenen Grenzen. Der reale Volumenstrom durch das Ventil hat dem im Radruckmodell abgebildeten entsprochen bzw. im wesentlichen entsprochen. Das Ventil wird im optimalen Durchflussbereich betrieben. Die Ansteuerkennlinie muss, was bei dieser Alternative besonders bevorzugt ist, nicht angepasst werden.

Das erfindungsgemäße Verfahren hat gegenüber dem weiter oben beschriebenen Verfahren gemäß dem Stand der Technik den Vorteil, dass die Ansteuerung der Ventile direkt überwacht und plausibilisiert wird. Außerdem arbeitet das Verfahren vollkommen unabhängig von der gewünschten Regelfrequenz.

Weitere bevorzugte Ausführungsformen ergeben sich aus den Unteransprüchen und der nachfolgenden Beschreibung eines Ausführungsbeispiels an Hand der Figuren.

Es zeigen

Fig. 1 eine Prinzipdarstellung der Druckregelvorrichtung für Kraftfahrzeugbremsen mit analoger Einlassventilregelung und

Fig. 2 Diagrammdarstellungen, die den Druckverlauf und die Volumenflussberechnung im Zusammenhang mit der Erfindung näher erläutern.

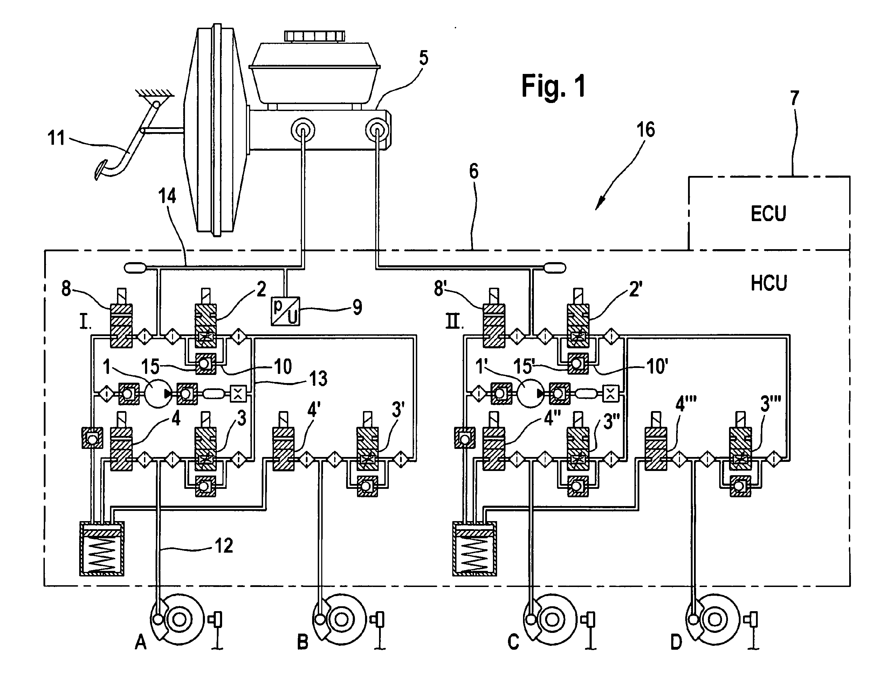

Fig. 1 dient zunächst zur Erläuterung des Aufbaus des elektronischen Bremssystems einschließlich der hydraulischen Komponenten, mit dem eine analoge Ansteuerung und Bremsenregelung durchführbar ist. In Fig. 1 ist Tandemhauptzylinder 5 mit Hydraulikeinheit 6 (HCU) eines elektronischen Kraftfahrzeugbremssystems verbunden. Elektronikeinheit 7 (ECU) umfasst ein Mikroprozessor/controllersystem, mit dem die im Ventilblock enthaltenen Aktuatoren und Sensoren elektronisch gesteuert bzw. ausgemessen werden können. Hydraulikeinheit 6 umfasst zwei Bremskreise I und II. Ferner umfasst jeder der Bremskreise je zwei Raddruckkreise (A, B bzw. C, D) mit jeweils einem Einlass- 3 bzw. 3' und einem Auslassventil 4 bzw. 4'. Die Elektronik der ECU 7 umfasst einen mehrkanaligen Stromregler, welcher eine unabhängige Regelung der Ströme durch die Spulen der stromlos offenen Trennventile 2, 2' und der stromlos offenen Einlassventile 3, 3' erlaubt. Bezugszeichen 8 bzw. 8' bezeichnen stromlos geschlossene elektronische Umschaltventile. In der zu Hauptzylinder 5 führenden Hydraulikleitung 14 befindet sich ein Eingangsdrucksensor 9. Das dargestellte Bremssystem umfasst in den Raddruckkreisen selbst keine weiteren Drucksensoren. Prinzipiell können dort aber auch zusätzliche Raddrucksensoren angeordnet werden, was jedoch auf Grund der Kosten häufig nicht der Fall ist. Pumpe 1 bzw. 1' ist zum selbstständigen Druckaufbau während einer Längs(ACC)-Regelung und bei Fahrdynamikregelungen (ESP) verwendbar, aber auch während ASR-Regelungen und der gewöhnlichen Rückförderung von Druckmittel bei Druckabbauvorgängen.

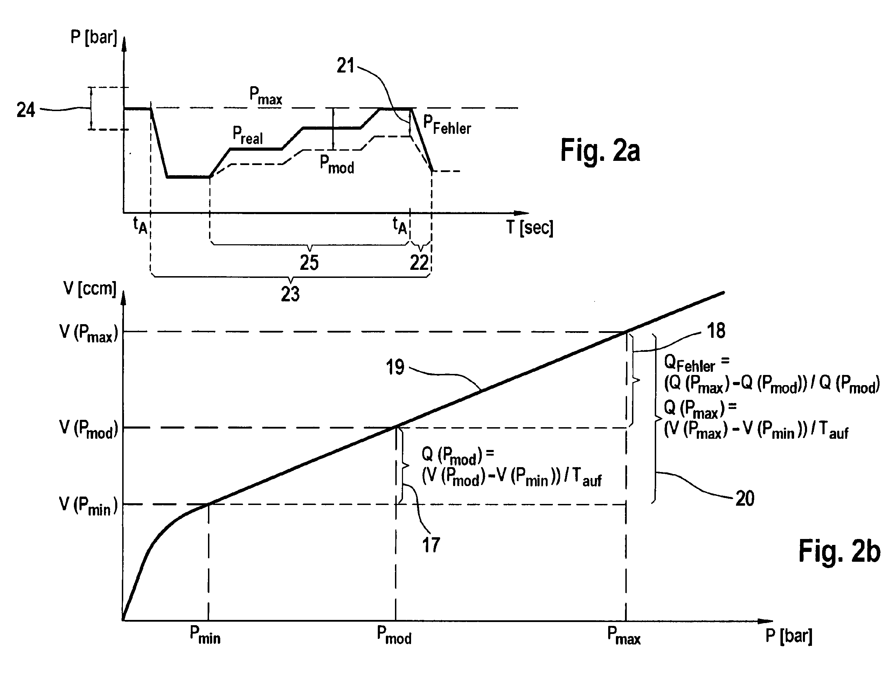

Das Verfahren gemäß der Erfindung wird nun an Hand von Fig. 2 näher erläutert. $P_{max}$ bezeichnet das auf an sich bekannte Weise aus der Druck-/Verzögerungskennlinie gebildete Modellblockierdruckniveau (nachfolgend kurz Blockierdruckniveau). $P_{mod}$ ist der sich aus dem Raddruckmodell ergebende aktuelle Raddruck. Im Diagramm in Fig. 2a sind die Verläufe der Modelldrücke $P_{max}$ und $P_{mod}$ während eines ABS-Druckregelzykluses 23 dargestellt. Für die Korrektur der analogen Ansteuerung des Einlassventils 3 (Fig. 1) wird zu Beginn der Druckabbauphase $t_A$ 21 (25 bezeichnet die Druckaufbauphase, in der das Analogventil regelt), welche einer Druckaufbauphase folgt, der aktuelle Raddruckmodellwert $P_{mod}$ mit dem aus der Druck/Verzögerungskennlinie ermittelten Blockerdruckniveau $P_{max}$ verglichen und analysiert. Zum Zeitpunkt $t_A$ wird hierzu zunächst die Differenz $P_{Fehler}$ zwischen $P_{max}$ und $P_{mod}$ gebildet:

$$P_{Fehler} = P_{max} - P_{mod} \quad (Fig.\ 2a,\ Bezugszeichen\ 21)$$

Dann kann bevorzugt noch geprüft werden, ob der Wert von $P_{max}$ zwischen der letzten und der aktuellen Abbauphase in einem Band 24 von $\pm$ X Prozent (z.B. 30 Prozent) liegt. Ist dies nicht der Fall, wird keine Korrektur der Ansteuerkennlinie des Analogventils vorgenommen. Hierdurch lässt sich vermeiden, dass Blockierdruckänderungen, die zum Beispiel durch Reibwertsprünge ausgelöst sind, fälschlicherweise eine Korrektur in der Ventilansteuerung hervorrufen.

Um Schwankungen der Radbremse auszugleichen, kann außerdem noch bevorzugt überprüft werden, ob der Betrag der obigen Differenz $P_{Fehler}$ größer als ein Wert ist, der proportional zum Blockierdruckniveau ist (im Beispiel ebenfalls 30 Prozent) :

$$|\,P_{Fehler}\,| > Y \bullet P_{max} \quad (z.\ B.\ mit\ Y = 0.3)$$

Ist dies nicht der Fall, wird keine Korrektur der Kennlinie vorgenommen. Damit sollen Schwankungen im Druckniveau, die über Reibwertschwankungen der Radbremse hervorgerufen werden, berücksichtigt werden.

Im nächsten Schritt werden der mittlere Volumenfluss $Q(P_{max})$ aus den Radvolumina V ausgehend von dem Volumen bei Blockerdruckniveau $V(P_{max})$ und der Druckaufbauzeit $T_{auf}$ berechnet. Analog wird ausgehend vom Volumen bei Raddruckniveau $V(P_{mod})$ der Volumenfluss $Q(P_{mod})$ berechnet. Hierzu wird jeweils eine Druck-/Volumenkennlinie 19 (Fig. 2b) zu Grunde gelegt, welche in der Elektronik fest hinterlegt ist. In den nachstehenden Gleichungen ist $P_{min}$ der sich aus dem Raddruckmodell ergebende Minimalwert des Drucks nach dem Druckabbau des vorherigen Regelzyklusses. $T_{auf}$ bezeichnet die Dauer des aktuellen Druckaufbaus 25 siehe Fig. 2a).

$$Q(P_{max}) = (V(P_{max}) - V(P_{min}))\ /\ T_{auf} \quad (Fig.\ 2b,\ Bezugszeichen\ 20)$$

$$Q(P_{mod}) = (V(P_{mod}) - V(P_{min}))\ /\ T_{auf} \quad (Fig.\ 2b,\ Bezugszeichen\ 17)$$

Schließlich wird mit den obigen Größen der Volumenstromfehler $Q_{Fehler}$ bei der Ventilansteuerung errechnet:

$$Q_{Fehler} = (Q\,(P_{max}) - Q\,(P_{mod}))\ /\ Q\,(P_{mod}) \quad (Fig.\ 2b,\ Bezugszeichen\ 18)$$

Nachfolgend sei der aktuelle Druckaufbauzyklus mit dem Wert n bezeichnet. Der darauf folgende Druckaufbauzyklus wird mit mit dem Wert n+1 indiziert. Im Zyklus n+1 wird entsprechend der nachfolgenden Formel dann der am Ventil eingestellte Volumenstrom $Q_{req}$ mit dem Wert des errechneten Volumenstromfehlers $Q_{Fehler}$ korrigiert, wobei der Betrag dieser Größe $|Q_{Fehler}|$ insbesondere auf einen Maximalwert $|Q_{Fehler}| < Q_{Fehler-max}$ begrenzt wird.

$$Q_{req,n+1} = Q_{req,\,n} \bullet (1 + Q_{Fehler})$$

Vorteilhaft kann auch sein, das Korrekturverfahren gemäß der Erfindung erst dann durchzuführen, wenn bereits eine bestimmte Anzahl von Regelzyklen während eines Bremsenregelungsvorgangs vorgelegen hat. Die Regelung befindet sich dann in einem eingeschwungenen Zustand und es werden deshalb genauere Korrekturwerte erzielt.

Gemäß einem weiteren bevorzugten Ausführungsform der Erfindung ist es möglich, $Q_{Fehler}$ über eine größere Anzahl von Zyklen oder über eine komplette ABS-Regelung zu bestimmen und einen Mittelwert aus den einzelnen Zyklen, oder über die gesamte ABS-Regelung zu bestimmen. Sinnvoll wäre insbesondere auch eine Abspeicherung des Korrekturwertes $Q_{Fehler}$ über den Zündungslauf hinaus, oder ein Überschreiben der in dem Bremsenregler gespeicherten Kennlinie.

**Patentansprüche**

1. Korrekturverfahren, bei dem Ansteuerkennlinien und/oder Korrekturwerte erzeugt werden, mit denen während einer Druckregelung der Ansteuerstrom für eines oder mehrere elektrisch angesteuerte, analog betriebene Hydraulikventile bemessen wird, in der Weise, dass während des Betriebs einer Blockierschutzregelung zunächst zumindest eine oder jeweils eine Ansteuerkennlinie vorgegeben wird und dann die vorgegebene Ansteuerkennlinie insbesondere im Wege eines Lernverfahrens korrigiert wird, **dadurch gekennzeichnet, dass** während einer Raddruckregelung der aktuelle Druckmodellwert für das geregelte Rad mit einem Modellblockierdruckniveau verglichen und mit dem Druckmodellwert und dem Modellblockierdruck unter Verwendung einer Druckmittel/Volumenkennlinie V (P) (19) der Druckmittelvolumenfluss Q(P) während eines Regelzyklusses bestimmt wird.

2. Verfahren nach Anspruch 1, **dadurch gekennzeichnet, dass** das Modellblockierdruckniveau aus einer Druck-/ Verzögerungskennlinie bestimmt wird.

3. Verfahren nach Anspruch 1 oder 2, **dadurch gekennzeichnet, dass** geprüft wird, ob der Druckmodellwert den Modellblockierdruck erreicht oder zumindest innerhalb einer zulässigen Toleranz erreicht.

4. Verfahren nach mindestens einem der vorhergehenden Ansprüche, **dadurch gekennzeichnet, dass** geprüft wird, ob der Druckmodellwert den Modellblockierdruck überschreitet oder diesen um einen vorgegebenen Mindestwert überschreitet.

5. Verfahren nach mindestens einem der vorhergehenden Ansprüche, **dadurch gekennzeichnet, dass** geprüft wird, ob der Druckmodellwert den Modellblockierdruck nicht erreicht oder zumindest innerhalb einer zulässigen Toleranz nicht erreicht.

6. Verfahren nach mindestens einem der vorhergehenden Ansprüche, **dadurch gekennzeichnet, dass** durch Vergleich des Druckmittelvolumenfluss $Q(P_{mod})$ in Abhängigkeit des Drucks aus dem Raddruckmodell und des Druckmittelvolumenfluss $Q(P_{max})$ in Abhängigkeit vom Modellblockierdruckniveau die Höhe der durchzuführenden Korrektur bestimmt wird (18).

7. Verfahren nach mindestens einem der vorhergehenden Ansprüche, **dadurch gekennzeichnet, dass** ein Lernverfahren durchgeführt wird, welches sich über mehrere Zyklen der Blockierschutzregelung mit der Anzahl n hinweg erstreckt und in jedem oder in jedem geeigneten Zyklus mit Hilfe der aus dem aktuellen Zyklus ermittelten Parameter nach einer rekursiven Formel eine Korrektur der vorgegebenen Kennlinie durchgeführt wird.

8. Verfahren nach mindestens einem der vorhergehenden Ansprüche, **dadurch gekennzeichnet, dass** die Analyse/der Vergleich des aktuellen Druckmodellwert mit dem Modell-blockierdruckniveau nach einer Druckaufbauphase durchgeführt wird.

9. Bremsdruckregelvorrichtung (16) mit zumindest Blockierschutzregelung, wobei der Regler während einer Regelung Bremsdrücke in mehreren Radbremsaktoren (A, B, C, D) durch Öffnen und Schließen der Einlassventile (3, 3', 3", 3"') bzw. Auslassventile (4, 4', 4", 4"') einregelt, wobei weiterhin die Einlassventile mittels eines elektrischen Stromreglers analog ansteuerbar sind, **dadurch gekennzeichnet, dass** der Regler ein Korrekturverfahren gemäß mindestens einem der Ansprüche 1 bis 8 im wesentlichen gleichzeitig während einer Blockierschutzregelung durchführt.

10. Verwendung des Verfahrens gemäß mindestens einem der Ansprüche 1 bis 8 in Kraftfahrzeugbremssystemen.

**Claims**

1. Correction method, in which actuation characteristic curves and/or correction values are generated and are used, during a pressure control process, to dimension the actuation current for one or more electrically actuated hydraulic valves which are operated in analogue fashion, in such a way that during the operation of an anti-lock brake system at first at least one or, in each case, one actuation characteristic curve is predefined and then the predefined actuation characteristic curve is corrected, in particular in the course of a learning process, **characterized in that** during a wheel pressure control process the current pressure model value for the controlled wheel is compared with a model locking-pressure level and the pressure medium volume flow Q(P) is determined during a control cycle with the pressure model value and the model locking pressure using a pressure medium/volume characteristic curve V(P) (19).

2. Method according to Claim 1, **characterized in that** the model locking-pressure level is determined from a pressure/deceleration characteristic curve.

3. Method according to Claim 1 or 2, **characterized in that** it is checked whether the pressure model value reaches the model locking pressure or reaches the model locking pressure at least within a permissible tolerance.

4. Method according to at least one of the preceding claims, **characterized in that** it is checked whether the pressure model value exceeds the model locking pressure or exceeds said model locking pressure by a predefined minimum value.

5. Method according to at least one of the preceding claims, **characterized in that** it is checked whether the pressure model value does not reach the model locking pressure or does not reach the model locking pressure at least within a permissible tolerance.

6. Method according to at least one of the preceding claims, **characterized in that** the level of the correction to be carried out is determined (18) by comparing the pressure medium volume flow $Q(P_{mod})$ as a function of the pressure from the wheel pressure model and the pressure medium volume flow $Q(P_{max})$ as a function of the model locking-pressure level.

7. Method according to at least one of the preceding claims, **characterized in that** a learning process is carried out which extends over a plurality of cycles of the anti-lock brake system with the number n, and in each cycle, or in each suitable cycle a correction of the predefined characteristic curve is carried out in accordance with a recursive formula by means of the parameters obtained from the current cycle.

8. Method according to at least one of the preceding claims, **characterized in that** the analysis /the comparison of the current pressure model value with the model locking-pressure level is carried out after a pressure build-up phase.

9. Brake pressure control device (16) having at least one anti-lock brake system, wherein during a control process the controller adjusts brake pressures in a plurality of wheel brake actuators (A, B, C, D) by opening and closing the inlet valves (3, 3', 3", 3"') and/or outlet valves (4, 4', 4", 4"'), wherein the inlet valves can also be driven in an analogue fashion by means of an electric current controller, **characterized in that**
the controller carries out a correction method according to at least one of Claims 1 to 8 essentially at the same time during an anti-lock brake control process.

10. Use of the method according to at least one of Claims 1 to 8 in motor vehicle brake systems.

**Revendications**

1. Procédé de correction, selon lequel sont générés des courbes caractéristiques d'excitation et/ou des valeurs de correction, avec lequel, pendant une régulation de la pression, est dimensionné le courant d'excitation pour une ou plusieurs vannes hydrauliques à commande électrique et à fonctionnement analogique de telle sorte que, pendant le fonctionnement d'une régulation de protection antiblocage, au moins une ou à chaque fois une courbe caractéristique d'excitation est tout d'abord prédéfinie et la courbe caractéristique d'excitation prédéfinie est ensuite corrigée, notamment au moyen d'un processus d'apprentissage, **caractérisé en ce que** pendant une régulation de la pression de roue, la valeur actuelle du modèle de pression pour la roue régulée est comparée avec un niveau de pression de blocage du modèle et le débit volumique de fluide pressurisé Q(P) pendant un cycle de régulation est déterminé avec la valeur du modèle de pression et la pression de blocage du modèle en utilisant une courbe caractéristique fluide pressurisé / volume V(P) (19).

2. Procédé selon la revendication 1, **caractérisé en ce que** le niveau de pression de blocage du modèle est déterminé à partir d'une courbe caractéristique pression/ralentissement.



3. Procédé selon la revendication 1 ou 2, **caractérisé en ce qu'**un contrôle est effectué pour vérifier si la valeur du modèle de pression atteint la pression de blocage du modèle ou l'atteint au moins avec une tolérance admissible.

4. Procédé selon au moins l'une des revendications précédentes, **caractérisé en ce qu'**un contrôle est effectué pour vérifier si la valeur du modèle de pression dépasse la pression de blocage du modèle ou la dépasse d'une valeur minimale prédéfinie.

5. Procédé selon au moins l'une des revendications précédentes, **caractérisé en ce qu'**un contrôle est effectué pour vérifier si la valeur du modèle de pression n'atteint pas la pression de blocage du modèle ou ne l'atteint pas au moins avec une tolérance admissible.

6. Procédé selon au moins l'une des revendications précédentes, **caractérisé en ce que** le niveau de correction à apporter est déterminé (18) en comparant le débit volumique de fluide pressurisé $Q(P_{mod})$ en fonction de la pression issue du modèle de pression de roue avec le débit volumique de fluide pressurisé $Q(P_{max})$ en fonction du niveau de pression de blocage du modèle.

7. Procédé selon au moins l'une des revendications précédentes, **caractérisé en ce qu'**un processus d'apprentissage est exécuté, lequel s'étend sur plusieurs cycles de la régulation de protection antiblocage avec le nombre n et une correction de la courbe caractéristique prédéfinie est effectuée dans chaque cycle ou dans chaque cycle approprié à l'aide des paramètres déterminés à partir du cycle actuel selon une formule récursive.

8. Procédé selon au moins l'une des revendications précédentes, **caractérisé en ce que** l'analyse / la comparaison de la valeur actuelle du modèle de pression avec le niveau de pression de blocage du modèle est effectuée après une phase d'établissement de la pression.

9. Dispositif de régulation de la pression de freinage (16) comprenant au moins une régulation de protection antiblocage, le régulateur asservissant pendant une régulation les pressions de freinage dans plusieurs actionneurs de frein de roue (A, B, C, D) en ouvrant et en fermant les vannes d'entrée (3, 3', 3", 3''') ou les vannes de sortie (4, 4', 4", 4'''), les vannes d'entrée pouvant en outre être commandées de manière analogique au moyen d'un régulateur de courant électrique, **caractérisé en ce que** le régulateur met en oeuvre un procédé de correction selon au moins l'une des revendications 1 à 8 pour l'essentiel simultanément pendant une régulation de protection antiblocage.

10. Utilisation du procédé selon au moins l'une des revendications 1 à 8 dans des systèmes de freinage de véhicule automobile.

Fig. 1

Fig. 2a

Fig. 2b

$$Q_{Fehler} = (Q(P_{max}) - Q(P_{mod})) / Q(P_{mod})$$

$$Q(P_{max}) = (V(P_{max}) - V(P_{min})) / T_{auf}$$

$$Q(P_{mod}) = (V(P_{mod}) - V(P_{min})) / T_{auf}$$

EP 2 152 555 B1

**IN DER BESCHREIBUNG AUFGEFÜHRTE DOKUMENTE**

**In der Beschreibung aufgeführte Patentdokumente**

- EP 0876270 A

- WO 2004101339 A